(19) **Europäisches Patentamt**

**European Patent Office**

**Office européen des brevets**

(11) **EP 1 142 144 B1**

(12) **EUROPÄISCHE PATENTSCHRIFT**

(45) Veröffentlichungstag und Bekanntmachung des Hinweises auf die Patenterteilung:
**12.11.2003   Patentblatt 2003/46**

(21) Anmeldenummer: **99964473.5**

(22) Anmeldetag: **30.12.1999**

(51) Int Cl.$^7$: **H04B 1/40**, H04B 1/30

(86) Internationale Anmeldenummer:
**PCT/DE99/04127**

(87) Internationale Veröffentlichungsnummer:
**WO 00/041322 (13.07.2000 Gazette 2000/28)**

(54) **SCHALTUNGSANORDNUNG FÜR EIN MEHRSTANDARD-KOMMUNIKATIONSENDGERÄT**

CIRCUIT FOR A MULTI-STANDARD COMMUNICATIONS TERMINAL

CIRCUIT POUR UN TERMINAL DE COMMUNICATION A PLUSIEURS NORMES

(84) Benannte Vertragsstaaten:
**AT BE CH CY DE DK ES FI FR GB GR IE IT LI LU MC NL PT SE**

(30) Priorität: **30.12.1998   DE 19860816**

(43) Veröffentlichungstag der Anmeldung:
**10.10.2001   Patentblatt 2001/41**

(73) Patentinhaber: **Infineon Technologies AG**
**81669 München (DE)**

(72) Erfinder:
• **DOETSCH, Markus**
  **D-81539 München (DE)**
• **JUNG, Peter**
  **D-67697 Otterberg (DE)**
• **PLECHINGER, Jörg**
  **D-80469 München (DE)**
• **SCHMIDT, Peter**
  **D-67167 Erpolzheim (DE)**
• **MEHRGARDT, Sönke**
  **D-82041 Deisenhofen (DE)**

(74) Vertreter: **Graf Lambsdorff, Matthias, Dr. et al**
**Lambsdorff & Lange,**
**Patentanwälte,**
**Dingolfinger Strasse 6**
**81673 München (DE)**

(56) Entgegenhaltungen:
WO-A-87/01531        US-A- 5 557 642
US-A- 5 619 536

**Beschreibung**

Die Erfindung betrifft eine Schaltungsanordnung für ein Mehrstandard-Kommunikationsendgerät nach dem Oberbegriff des Anspruchs 1.

In heute üblichen Kommunikationssystemen, insbesondere in solchen, welche die drahtlose Kommunikation realisieren, werden analoge Signale einer vorgegebenen Bandbreite B empfangen. Diese Bandbreite B ist systemspezifisch. Beispielsweise ist die Bandbreite B von Signalen im Global System for Mobile Communications (GSM) gleich 200 kHz und diejenige im CDMA-(Code Division Multiple Access)-System IS-95 gleich 1,25 MHz.

Es sind bereits Mehrstandardgeräte (auch als Mehrbandgeräte bezeichnet) bekannt, die mehrere Systemstandards, beispielsweise sowohl GSM als auch IS-95 unterstützen. Diese Geräte verwenden für jeden Systemstandard einen eigenen standardspezifischen Analog-Digital- (A/D-) Umsetzer, an den sich im Digitalbereich ein entsprechend optimiertes, ebenfalls standardspezifisches Selektionsfilter anschließen. Die A/D-Umsetzer digitalisieren jeder für sich Signale mit einer Bandbreite B', die größer als die Bandbreite B ist. Die Selektionsfilter führen die Bandbegrenzung auf die jeweils gewünschte standardspezifische Bandbreite B durch und dezimieren die Abtastrate (Abtastratenreduktion). Jede Kombination aus A/D-Umsetzer und Selektionsfilter ist fest vorgegeben.

Bei diesen bekannten Kommunikationsendgeräten ist nachteilig, daß die Verwendung von standardspezifischen A/D-Umsetzen und zugeordneten standardspezifischen Selektions filtern einen verhältnismäßig großen Hardware-Aufwand darstellt. Ein weiterer Nachteil dieser Geräte besteht darin, daß das nachträgliche Einbeziehen weiterer Systemstandards in der Regel nur durch Veränderungen auf Hardware-Ebene realisierbar ist.

Die US-A-5,619,536 und die US-A-5,557,642 beschreiben jeweils Empfangsschaltungen für die Mobilfunkkommunikation, welche ein Hochfrequenzteil, eine Empfangsmischstufe, eine Signalverarbeitungsschaltung, einen AD/D-Umsetzter, eine Selektionseinheit und ein digitales Filter aufweisen, wobei das digitale Filter eine variable Bandbreite aufweist, die abhängig von dem verwendeten Systemstandard einstellbar ist.

Die WO 87 01531 A offenbart einen digitalen Radio-Frequenzempfänger in welchem unter anderem der Ein dazu unterschiedlicher Anordnungen und Zusammensetzungen von digitalen Filtern beschrieben wird.

Der Erfindung liegt die Aufgabe zugrunde, eine Schaltungsanordnung für ein Mehrstandard-Kommunikationsendgerät zu schaffen, die mit geringem Hardware-Aufwand realisierbar ist. Insbesondere soll die Schaltungsanordnung eine hohe Flexibilität hinsichtlich der mit dem Mehrstandard-Kommunikationsendgerät empfangbaren Systemstandards bieten.

Die der Erfindung zugrundeliegende Aufgabenstellung wird durch die Merkmale des Anspruchs 1 gelöst.

Aufgrund der Variabilität der Durchlaßbandbreite des digitalen Filters läßt sich mit diesem eine standardspezifische Bandbegrenzung durchführen, wobei ein und dasselbe digitale Filter für die Bandbreitenbegrenzung aller empfangenen Systemstandards verwendet wird. Dadurch wird der Hardware-Aufwand reduziert, da es nicht mehr erforderlich ist, für jeden Systemstandard ein eigenes für diesen ausgelegtes digitales Filter vorzusehen.

Darüber hinaus wird durch eine geeignete Programmierfunktionalität des Filters auch die Einbeziehung nachträglich hinzutretender Systemstandards ermöglicht. Damit wird die Flexibilität und der Funktionsbereich des Mehrstandard-Kommunikationsendgerätes weiter erhöht.

Ein gewünschter Systemstandard kann einerseits auf automatische Weise festgelegt werden, indem die Schaltungsanordnung einen empfangenen Systemstandard durch Auswertung der entsprechenden HF-Eingangssignale, insbesondere Funksignale erkennt und nachfolgend die dem erkannten Systemstandard entsprechende Durchlaßbandbreite des digitalen Filters einstellt. Bei örtlich wechselnden Systemstandards ist dann stets dafür gesorgt, daß das Mehrstandard-Kommunikationsendgerät auf den lokalen Systemstandard eingestellt ist. Andererseits ist es auch möglich, daß die Wahl des Systemstandards durch den Teilnehmer selbst getroffen wird. Dies ermöglicht dem Teilnehmer, gezielt zwischen unterschiedlichen Standards, beispielsweise GSM und IS-95 zu wählen, sofern , Funksignale mehrerer Systemstandards vorliegen. Da unterschiedlichen Systemstandards in der Regel auch unterschiedliche Netze sowie unterschiedliche Netzbetreiber zugrunde liegen, wird damit dem Teilnehmer auch die Wahl zwischen den verschiedenen Leistungsmerkmalen der Netze und Leistungsangeboten bzw. Diensten der Netzbetreiber ermöglicht.

Der hier verwendete Begriff Systemstandard ist in einem weiten Sinne zu verstehen. Unterschiedliche Systemstandards nach dem hier verwendeten Sprachgebrauch liegen (zumindest) immer dann vor, wenn die Systeme HF-Eingangssignale (Funksignale) unterschiedlicher Bandbreiten verwenden.

Bei dem durch Heruntermischen erzeugten analogen Empfangssignal kann es sich sowohl um ein Basisbandsignal als auch um ein Signal in einem Zwischenfrequenzbereich (beispielsweise 300 MHz in GSM) handeln. Mit anderen Worten umfaßt die Erfindung sowohl nach dem Homodynprinzip arbeitende Schaltungsanordnungen für "Direktumwandlungsempfänger" als auch Schaltungsanordnungen für Heterodynempfänger.

Vorzugsweise umfaßt die Selektionseinheit ferner eine Abtastraten-Reduzierschaltung variabler Abtastratenreduktion, wobei die im Betrieb eingestellte Abtastratenreduktion in Abhängigkeit von dem gewünschten Systemstandard bestimmt ist. Durch diese Maßnahme wird zusätzlich zu der standardspezifischen Bandbegrenzung auch eine standardspezifische Reduktion der Abtastrate bewirkt. Dadurch kann die am Ausgang der Selektionseinheit vorhandene Abtastrate so eingestellt werden, daß sie den unterschiedlichen Erfordernissen der einzelnen Systemstandards in bezug auf Symbolrate und Signaldynamik genügt.

Das digitale Filter kann baulich in unterschiedlicher Weise realisiert sein.

Nach einer ersten vorteilhaften Ausführungsvariante der Erfindung ist das digitale Filter in Form einer integrierten Schaltung mit einem Koeffizienteneingang zum Einstellen von Filterkoeffizienten ausgebildet. Durch Eingabe von einem bestimmten Systemstandard zugeordneten Filterkoeffizienten ist das Filter dann (systemstandardspezifisch) konfiguriert. Zur Speicherung der Filterkoeffizienten kann in der integrierten Schaltung ein mit dem Koeffizienteneingang in Verbindung stehendes Schieberegister enthalten sein.

Nach einer zweiten vorteilhaften Ausführungsvariante umfaßt das digitale Filter einen programmierbaren Festwertspeicher (EEPROM), in dem eine Tabelle abgelegt ist, die jedem Systemstandard einen Satz von Filterkoeffizienten zuordnet. In diesem Fall sind die gewünschten Filterkoeffizienten bereits in dem digitalen Filterchip enthalten und es muß durch eine von außen erfolgende Anwahl lediglich der gewünschte Koeffizientensatz aufgerufen werden. Bei dieser Variante ist vorteilhaft, daß sich das digitale Filter durch Umprogrammierung des Festwertspeichers (d.h. Abspeichern neuer Koeffizientensätze) an neue Systemstandards anpassen läßt.

Zur Ausführung der die Filterung repräsentierenden Rechenoperationen kann das Filter festverdrahtete Digitalschaltungen wie einen Addierer, einen Multiplizierer, ein Schieberegister und dergleichen umfassen. Der konkrete Schaltungsaufbau bestimmt dabei den Typ des Filters (beispielsweise seriell, parallel, FIR, IIR). Eine andere Möglichkeit besteht darin, daß das digitale Filter als programmierbarer Signalprozessor ausgebildet ist. In diesem Fall ist der verwendete Filtertyp zunächst variabel und wird erst durch die Programmierung des Signalprozessors festgelegt.

Als digitale Filter können sowohl FIR- als auch IIR-Filter zum Einsatz kommen. Während IIR-Filter eine höhere Selektivität und einen niedrigeren Rechenbedarf als FIR-Filter aufweisen, besitzen letztere unter anderem den Vorteil, daß sie unabhängig von der Koeffizientenwahl stets eine sehr geringe Schwingungsneigung, d.h. für alle Systemstandards gleichmäßig gute Stabilitätseigenschaften aufweisen.

Eine unter dem Gesichtspunkt möglichst geringen Rechenaufwands günstige Realisierung des digitalen Filters kennzeichnet sich dadurch, daß das digitale Filter aus mehreren Einzelfiltern aufgebaut ist, daß die Abtastraten-Reduzierschaltung aus mehreren Einzelabtastraten-Reduzierschaltungen aufgebaut ist, und daß die Einzelfilter und die Einzelabtastraten-Reduzierschaltungen alternierend in Reihe angeordnet sind.

Zur Erhöhung der Umsetzungsgenauigkeit wird vorzugsweise als A/D-Umsetzer ein Delta-Sigma ($\Delta\Sigma$) A/D-Umsetzer insbesondere dritter Ordnung eingesetzt. Dadurch kann eine wesentliche Verminderung des Quantisierungsfehlers und somit eine Verbesserung des Signal-zu-Rausch-Verhältnisses am Ausgang der Selektionseinheit erreicht werden.

Weitere vorteilhafte Ausgestaltungen der Erfindung sind in den Unteransprüchen angegeben.

Die Erfindung wird nachfolgend anhand eines Ausführungsbeispiels unter Bezugnahme auf die Zeichnung beschrieben; in dieser zeigt:

Fig. 1   ein Blockschaltbild einer erfindungsgemäßen Schaltungsanordnung für einen Homodynempfänger;

Fig. 2   ein Blockschaltbild einer Selektionseinheit;

Fig. 3   ein Blockschaltbild eines parallelen FIR-Filters;

Fig. 4   ein Blockschaltbild eines seriellen FIR-Filters mit programmierbarem Festwertspeicher;

Fig. 5   ein Diagramm, das das Signal-zu-Rausch-Verhältnis (SNR) eines üblichen A/D-Umsetzers und eines $\Delta\Sigma$ A/D-Umsetzers als Funktion der Überabtastung darstellt; und

Fig. 6   ein Diagramm, das die Signaldynamik am Ausgang der Selektionseinheit in Abhängigkeit von der Abtastrate am Ausgang der Selektionseinheit darstellt.

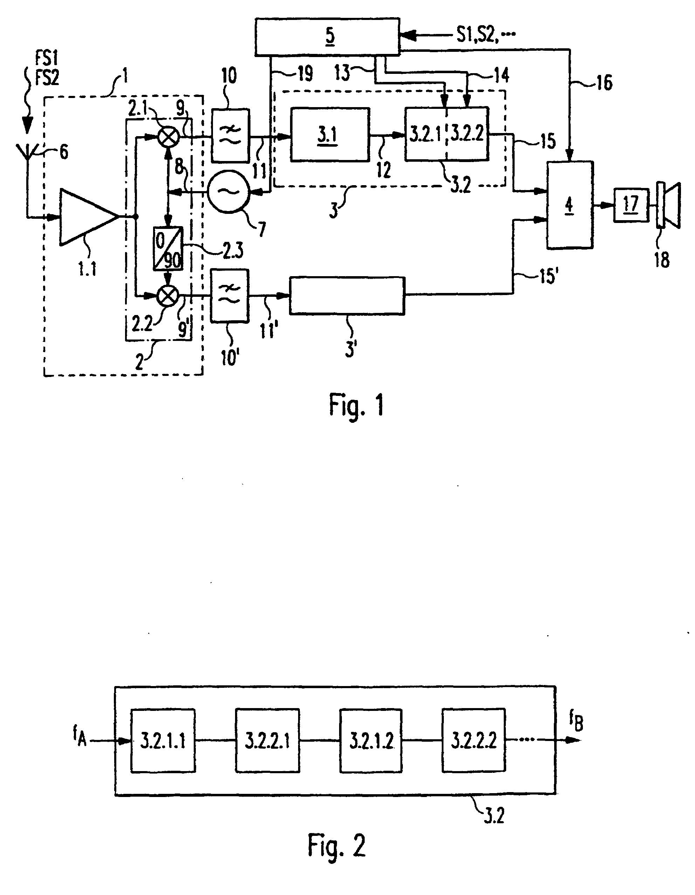

Fig. 1 zeigt eine erfindungsgemäße Schaltungsanordnung, wie sie in einem Kommunikationsendgerät, beispielsweise einer Mobilstation eines Mobilfunksystems zum Einsatz kommen kann.

Ein Hochfrequenzteil 1 der Schaltungsanordnung umfaßt einen Verstärker mit automatischer Verstärkungsregelung 1.1, dessen Signaleingang mit einer Empfangsantenne 6 verbunden ist.

Die Empfangsantenne 6 empfängt Funksignale FS1 und FS2, die von einer nicht dargestellten Basisstation ausgesendet werden. Den beiden Funksignalen FS1 und FS2 liegen unterschiedliche Mobilfunkstandards S1 und S2 zugrunde. Beispiele für unterschiedliche Mobilfunkstandards sind die US-amerikanischen Standards AMPS (Advanced Mobile Phone Service) und IS-95 (Interim Standard 95) oder der paneuropäische Standard GSM bzw. dessen Variante DCS 1800 (Digital Cellular System 1800). Vorliegend soll bereits dann von unterschiedlichen Systemstandards S1 und S2 die Rede sein, wenn S1 und S2 unterschiedliche Bandbreiten BS1 bzw. BS2 aufweisen. Üblicherweise unterscheiden sich Systemstandards S1, S2 jedoch noch durch eine Vielzahl von weiteren Parametern, die beispielsweise die Trägerfrequenz, die Art des Vielfachzugriffs, die Bitrate, die Modulationsart, die Quellen- und Kanalcodierung usw. betreffen.

Die Funksignale FS1 und FS2 werden in dem Verstärker 1.1 verstärkt. An seinem Ausgang stellt der Verstärker 1.1 ein analoges HF-Empfangssignal zur Verfügung, das den überlagerten empfangenen Funksignalen (FS1, FS2) entspricht. Das HF-Empfangssignal wird den Eingängen zweier parallel geschalteter erster und zweiter Abwärtsmischer 2.1 und 2.2 zugeführt.

Die Mischfrequenz $f_M$ für die beiden Abwärtsmischer 2.1 und 2.2 wird durch ein Mischfrequenzsignal 8 eines lokalen Oszillators 7 bereitgestellt. Während das Mischfrequenzsignal 8 dem ersten Abwärtsmischer 2.1 direkt zugeführt wird, durchläuft es vor Eingabe in den zweiten Abwärtsmischer 2.2 einen 90°-Phasenschieber 2.3. Das von dem ersten Abwärtsmischer 2.1 ausgegebene heruntergemischte analoge Empfangssignal 9 wird üblicherweise als Inphase-(I)-Empfangssignal und das von dem zweiten Abwärtsmischer 2.2 ausgegebene phasenverschobene analoge Empfangssignal 9' als Quadratur-(Q)-Empfangssignal bezeichnet.

Die beiden Abwärtsmischer 2.1 und 2.2 sowie der 90°-Phasenschieber 2.3 bilden die in der Fig. 1 mit einer strichpunktierten Linie dargestellte Empfangsmischstufe 2.

Die weitere Verarbeitung der analogen I- und Q-Empfangssignale 9, 9' ist identisch. Sie wird daher im folgenden lediglich anhand des analogen I-Empfangssignals 9 erläutert. Ferner wird zur einfacheren Darstellung nur der Basisbandbereich betrachtet, d.h. ein Homodynempfänger zugrunde gelegt. Die folgende Beschreibung ist in analoger Weise auf den Fall eines Heterodynempfängers übertragbar, indem statt des Basisbandbereichs ein Zwischenfrequenzbereich und anstelle des im folgenden noch näher beschriebenen digitalen Tiefpaßfilters mit variabler Durchlaßbandbreite ein digitales Bandpaßfilter mit variabler Durchlaßbandbreite betrachtet wird.

Das analoge I-Empfangssignal 9 wird einem analogen Tiefpaßfilter 10 eingegeben. Das Tiefpaßfilter 10 führt eine erste Bandbegrenzung des empfangenen Signals auf eine Bandbreite B' durch. Die Bandbreite B' ist Systemstandard-unspezifisch und muß daher größer als die größte der Bandbreiten BS1, BS2 sämtlicher empfangener Funksignale FS1, FS2 sein.

Das von dem analogen Tiefpaßfilter 10 (bzw. hinsichtlich des Q-Zweiges von dem analogen Tiefpaßfilter 10') ausgegebene analoge I-Empfangssignal 11 (bzw. analoge Q-Empfangssignal 11') wird einer Signalverarbeitungsschaltung 3 (bzw. 3') zugeführt. Die Signalverarbeitungsschaltung 3 weist eingangsseitig einen $\Delta\Sigma$ A/D-Umsetzer 3.1 und eine diesem nachgeschaltete Selektionseinheit 3.2 auf.

Der $\Delta\Sigma$ A/D-Umsetzer 3.1 tastet das analoge I-Empfangssignal 11 mit einer Abtastfrequenz $f_A$ ab. Zur Erzielung einer hohen Umsetzgenauigkeit arbeitet der $\Delta\Sigma$ A/D-Umsetzer 3.1 in Überabtastung, d.h. es gilt $f_A > 2B'$.

Bei dem $\Delta\Sigma$ A/D-Umsetzer 3.1 kann es sich um einen Umsetzer erster oder höherer Ordnung handeln. Je höher die Ordnung, desto höher ist die Umsetzgenauigkeit - allerdings steigt mit höherer Ordnung auch der Rechenaufwand. Ein $\Delta\Sigma$ A/D-Umsetzer 3.1 dritter Ordnung realisiert einen für die vorliegende Erfindung guten Kompromiß zwischen Umsetzgenauigkeit und Rechenaufwand. Der Aufbau von $\Delta\Sigma$ A/D-Umsetzern ist grundsätzlich bekannt und wird im folgenden deswegen nicht näher erläutert.

Das von dem $\Delta\Sigma$ A/D-Umsetzer 3.1 ausgegebene digitale Empfangssignal 12 wird einem digitalen Filter 3.2.1 der Selektionseinheit 3.2 zugeführt. Das digitale Filter 3.2.1 weist erfindungsgemäß eine variabel einstellbare Durchlaßbandbreite DB auf.

Ferner weist die Selektionseinheit 3.2 ein Abtastraten-Reduzierrechenwerk 3.2.2 auf. Das Abtastraten-Reduzierrechenwerk 3.2.2 führt eine Verminderung der am Eingang der Selektionseinheit 3.2 vorliegenden Abtastrate $f_A$ auf eine am Ausgang der Selektionseinheit 3.2 vorliegende Abtastrate $f_B$ durch.

Zur Einstellung der Durchlaßbandbreite DB des digitalen (Tiefpaß-)Filters 3.2.1 ist eine Steuereinheit 5 vorgesehen, welche dem Filter 3.2.1 ein Bandbreiten-Einstellsignal 13 zuleitet. Neben dem Bandbreiten-Einstellsignal 13 kann die Steuereinheit 5 ferner ein Abtastratenreduktions-Einstellsignal 14 ausgeben, das dem Abtastraten-Reduzierrechenwerk 3.2.2 zugeführt wird und diesem eine gewünschte ausgangsseitige Abtastrate $f_B$ mitteilt.

Am Ausgang der Selektionseinheit 3.2 steht (bezüglich des I-Zweigs) ein bandbreitenbegrenztes digitales Ausgabesignal 15 bereit. Dieses Ausgabesignal 15 wird zusammen mit einem entsprechend erzeugten bandbreitenbegrenzten digitalen Ausgabesignal 15' des Q-Zweiges einem digitalen Signalprozessor (DSP) 4 zugeführt.

Der DSP 4 führt in üblicher Weise die weiteren Signalverarbeitungsschritte durch. Hierzu kann der DSP 4 in nicht dargestellter Weise einen Kanalschätzer, einen Datendetektor, einen Entschachteler, einen Kanaldecodierer sowie einen Quellendecodierer umfassen.

Der Kanalschätzer hat die Aufgabe, in regelmäßigen Zeitabständen (etwa jede 1 ms) die Übertragungsfunktion des zeitvarianten Mobilfunkkanals zu ermitteln. Da sich diese Übertragungsfunktion aufgrund von wechselnden Umgebungseinflüssen ständig ändert, ist eine Datendetektion ohne die Kenntnis der aktuellen Übertragungsfunktion nicht möglich.

Der Datendetektor führt dann unter Verwendung der aktuellen Übertragungsfunktion die Datendetektion durch.

Die detektierten Daten werden nachfolgend entschachtelt, kanaldecodiert und quellendecodiert.

Sämtliche angesprochenen Datenverarbeitungsprozesse in dem DSP 4 können standardspezifisch sein, d.h. müssen je nach gewähltem Systemstandard S1, S2 gemäß unterschiedlichen Algorithmen durchgeführt werden. Zu diesem Zweck wird dem DSP 4 über eine Signalleitung 16 von der Steuereinheit 5 der gewählte Systemstandard S1, S2 mitgeteilt.

Dem DSP 4 schließt sich ein D/A-Umsetzer 17 sowie ein Lautsprecher 18 an.

Die Arbeitsweise der erfindungsgemäßen Schaltungsanordnung ist wie folgt:

Zunächst muß die Schaltungsanordnung auf einen der empfangenen Systemstandards S1, S2 eingestellt werden. Hierfür wird von dem Teilnehmer der gewünschte Systemstandard S1 oder S2 direkt in die Steuereinheit 5 eingegeben, oder es ist in nicht dargestellter Weise auch möglich, daß der Systemstandard S1 oder S2 von der Schaltungsanordnung selbsttätig, beispielsweise durch Auswertung des oder der empfangenen Funksignale FS1 und FS2 eingestellt wird. Im letzteren Fall kann die Einstellung auch gemäß einem von dem Teilnehmer zuvor eingegebenen Auswahlprofil (z.B. Auswahl des kostengünstigsten empfangenen Systemstandards) erfolgen.

Im folgenden soll davon ausgegangen werden, daß der Systemstandard S1 der GSM-Standard ist und es sich bei dem Systemstandard S2 um IS-95 handelt. In diesem Fall beträgt die Bandbreite BS1 von S1 200 kHz und die Bandbreite BS2 von S2 1,25 MHz.

Die Trägerfrequenzen dieser beiden Standards S1 und S2 sind ebenfalls unterschiedlich. Um der Mischstufe 2 ein Heruntermischen des verstärkten HF-Empfangssignals in das Basisband (bzw. auf eine geeignete Zwischenfrequenz) zu ermöglichen, muß dem lokalen Oszillator 7 die geforderte Mischfrequenz $f_M$ mitgeteilt werden. Dies erfolgt über die Signalleitung 19, mit der die Steuereinheit 5 mit dem lokalen Oszillator 7 in Verbindung steht. Bei einer Wahl von S1 (GSM) liegt die Mischfrequenz $f_M$ für eine Direktumwandlung (Homodynprinzip) im Bereich von 900 MHz.

Die Abtastrate $f_A$ des $\Delta\Sigma$ A/D-Umsetzers 3.1 kann beispielsweise 6,5 MHz betragen.

Das digitale Tiefpaßfilter 3.2.1 führt eine Bandbreitenbegrenzung DB auf die systemspezifische GSM-Bandbreite BS1 = 200 kHz oder etwas darunter durch.

Das Abtastraten-Reduzierrechenwerk 3.2.2 reduziert die Abtastrate auf die GSM-Symbolrate (Bitrate) von $f_B = 271 \times 10^3$ Abtastungen/s.

Wird nun von dem Teilnehmer der Systemstandard S2 (IS-95) gewählt, so wird neben der bereits angesprochenen Änderung der Mischfrequenz $f_M$ über das Bandbreiten-Einstellsignal 13 die Durchlaßbandbreite DB des digitalen Filters 3.2.1 auf die Bandbreite von IS-95 (BS2 = 1,25 MHz) oder etwas darunter eingestellt. Über das Abtastratenreduktions-Einstellsignal 14 wird die Abtastrate $f_B$ am Ausgang der Selektionseinheit 3.2 auf $f_B$ = 1,23 x $10^6$ Abtastungen/s des IS-95-Systemstandards eingestellt. Die Selektionseinheit 3.2 führt dann sowohl die Bandbreitenbegrenzung als auch die Dezimierung der Abtastrate gemäß dem Systemstandard S2 (IS-95) durch.

Fig. 2 zeigt in schematischer Weise den Aufbau einer Selektionseinheit 3.2, bei der Filterblöcke 3.2.1.1 und 3.2.1.2 sowie Abtastraten-Reduzierrechenwerksblöcke 3.2.2.1 und 3.2.2.2 in alternierender Weise kaskadierend angeordnet sind. Dieser Aufbau weist den Vorteil eines verringerten Rechenaufwands auf, da die Abtastrate stets an die gerade erreichte Bandbreitenbegrenzung angepaßt ist.

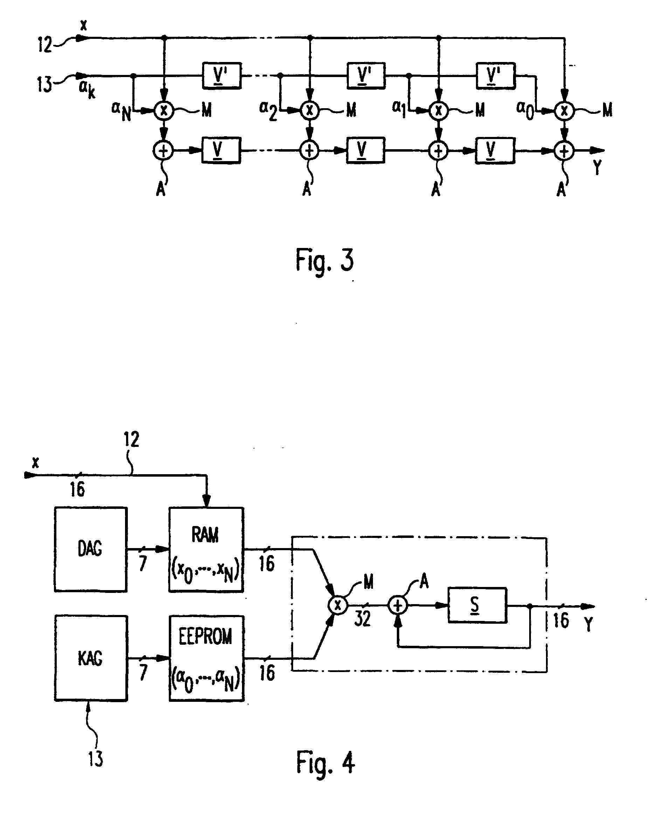

Das digitale Filter 3.2.1 kann als ein im Handel erhältlicher integrierter Filterbaustein ausgebildet sein. Fig. 3 zeigt den Aufbau eines solchen integrierten Filterbausteins am Beispiel eines parallelen FIR-Filters N-ter Ordnung.

Das FIR-Filter umfaßt Addierer A, Multiplizierer M und Verzögerungsglieder V. Die Werte x des digitalen Eingangssignals 12 werden sämtlichen Multiplizierern M zeitgleich zugeführt und dort mit Filterkoeffizienten $\alpha_0$ $\alpha_1$, $\alpha_2$, ..., $\alpha_N$ multipliziert. Die Werte y des digitalen Ausgangssignals des FIR-Filters werden in der dargestellten Weise durch Addition und Verzögerung um einen Systemtakt berechnet.

Ein Filterkoeffizientensatz ($\alpha_0$, $\alpha_1$, ..., $\alpha_N$) definiert die Durchlaßbandbreite DB des Filters. Die Steuereinheit 5 enthält eine in einem Speicher abgelegte Tabelle, die jedem Systemstandard S1, S2 einen Filterkoeffizientensatz ($\alpha_0$, $\alpha_1$, ..., $\alpha_N$) zuordnet. Bei Auswahl eines bestimmten Systemstandards S1 oder S2 wird der entsprechende Filterkoeffizientensatz über das Bandbreiten-Einstellsignal 13 in das Filter geladen, wobei dieses zur Speicherung der Koeffizienten Verzögerungsglieder V' umfaßt, welche in der dargestellten Weise ein Schieberegister bilden.

Die erfindungsgemäße Adaptivität des in Fig. 3 dargestellten digitalen FIR-Filters beruht also darauf, daß es sich durch Austausch des Koeffizientensatzes auf einen anderen Systemstandard konfigurieren läßt.

Das in Fig. 3 dargestellte FIR-Filter ist aufgrund der Parallelverarbeitung besonders für hohe eingangsseitige Abtastraten $f_A$ geeignet.

Fig. 4 zeigt eine zweite Variante zur Realisierung des digitalen Filters 3.2.1. Das in Fig. 4 dargestellte Filter ist ein serielles FIR-Filter, das vollständig auf einem Chip integriert ist. Das Filter umfaßt einen Schreib-/Lesespeicher (RAM), in den N+1 Werte $x_0$, ..., $x_N$ des digitalen Empfangssignals 12 eingelesen werden. Ferner enthält das Filter einen programmierbaren Festwertspeicher (EEPROM), in welchem die Filter-Koeffizientensätze ($\alpha_0$, ..., $\alpha_N$) der in Frage kommenden Systemstandards S1, S2 eingespeichert sind. Die Dateneingangswerte $x_0$, ..., $x_N$ und die Filterkoeffizienten $\alpha_0$, ..., $\alpha_N$ eines über das Bandbreiten-Einstellsignal 13 vorgewählten Filterkoeffizientensatzes werden nacheinander von einem Datenadressengenerator DAG bzw. einem Koeffizientenadressengenerator KAG aufgerufen, in einem einzelnen Multiplizierer M multipliziert und von einem einzelnen Addierer A mit nachgeschaltetem Speicher S rekursiv aufaddiert. Multiplizierer M, Addierer A und Speicher S sind in dem Filterchip in festverdrahteter Form realisiert. Das in Fig. 4 dargestellte serielle FIR-Filter weist den Vorteil eines hardwaremäßig einfachen Aufbaus auf, weil im Gegensatz zu dem in Fig. 3 dargestellten parallelen FIR-Filter nur ein Multiplizierer M und nur ein Addierer A erforderlich sind.

Gemäß einer dritten Variante ist das erfindungsgemäß eingesetzte Filter 3.2.1 als programmierbarer Signalprozessor aufgebaut. In diesem Fall wird die in Fig. 4 durch die Verschaltung des Multiplizierers M, Addierers A und Speichers S vorgegebene Rechenvorschrift durch Abarbeitung eines Filterprogramms, d. h. softwaremäßig realisiert. Durch Umprogrammierung eines derartigen Signalprozessors können nicht nur die Filterkoeffizienten ausgetauscht bzw. die Ordnung N des Filters verändert werden, sondern es ist auch möglich, den Typ des Filters (beispielsweise parallel, seriell, FIR oder IIR) in Systemstandard-abhängiger Weise zu modifizieren. Zu diesem Zweck können in einem Speicherbereich der Steuereinheit 5 für jeden Systemstandard S1, S2 Filterprogramme FP1, FP2 abgelegt sein und bei Anwahl eines Systemstandards S1, S2 kann das entsprechende Filterprogramm FP1 bzw. FP2 über eine Datenverbindung ähnlich dem Bandbreiten-Einstellsignal 13 in das Filter 3.2.1 geladen werden.

Je nach dem Aufbau des digitalen Filters 3.2.1 sind Werte für N zwischen 5 und 20, insbesondere zwischen 10 und 18 zweckmäßig.

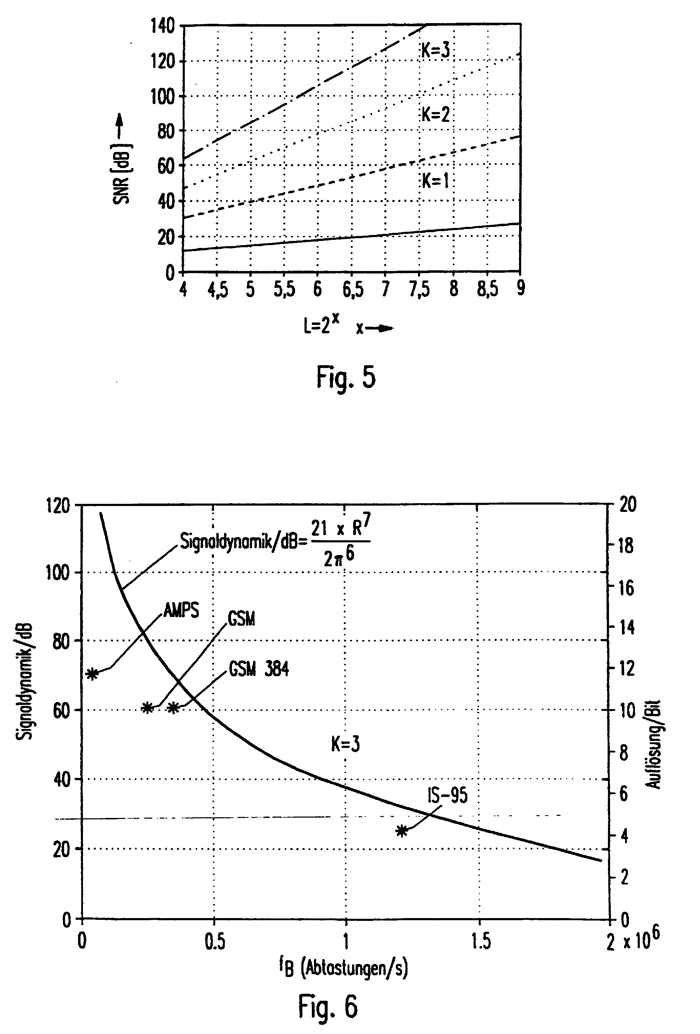

Fig. 5 verdeutlicht das Rauschverhalten eines üblichen A/D-Umsetzers (durchgezogene Linie) und von ΔΣ A/D-Umsetzern 3.1 der Ordnungen K, K = 1, 2 und 3 als Funktion des Überabtastfaktors L (L = $2^×$), welcher gemäß der Gleichung $f_A$ = L × 2B' durch die eingangsseitige Abtastrate $f_A$ und die Bandbreite B' des Tiefpaßfilters 10 bestimmt ist. Es ist erkennbar, daß das Signal-zu-Rausch-Verhältnis (SNR) durch Erhöhung der eingangsseitigen Abtastrate $f_A$ und durch Wahl eines ΔΣ-A/D-Umsetzers 3.1 höherer Ordnung K verbessert werden kann.

In nicht dargestellter Weise kann vorgesehen sein, daß auch die eingangsseitige Abtastrate $f_A$ von der Steuereinheit 5 Systemstandard-abhängig eingestellt wird.

In Fig. 6 ist die Signaldynamik (in dB) am Ausgang der Selektionseinheit 3.2 als Funktion der ausgangsseitigen Abtastrate $f_B$ dargestellt. Ferner ist im rechten Teil der Figur die Auflösung pro Bit des Ausgabesignals 15 angegeben. Der Darstellung liegt eine feste eingangsseitige Abtastrate $f_A$ = 6,5 MHz sowie ein ΔΣ A/D-Umsetzer 3.1 der dritten Ordnung (K = 3) zugrunde. Es wird deutlich, daß die am Ausgang der Selektionseinheit 3.2 erzielbare Signaldynamik von der Abtastrate $f_B$ am Ausgang dieser Selektionseinheit 3.2 abhängt.

In Fig. 6 sind die für die Mobilfunkstandards AMPS, GSM, GSM 384 und IS-95 erforderlichen Signaldynamikwerte (sowie die entsprechenden Werte der Auflösung pro Bit) eingetragen. Systemstandards mit einer hohen ausgangsseitigen Abtastrate $f_B$ benötigen am Ausgang der Selektionseinheit 3.2 häufig eine geringere Signaldynamik als Systemstandards mit einer geringen Abtastrate $f_B$ am Ausgang der Selektionseinheit 3.2. Beispielsweise benötigt IS-95 eine Abtastrate von $1,23 × 10^6$ Abtastungen/s und eine Signaldynamik von 24 dB, während GSM bei einer Abtastrate von $2,71 × 10^5$ Abtastungen/s etwa eine Signaldynamik von 60 dB benötigt. Als Abtastraten-Reduktionsfaktor R wird durch R = $f_A/f_B$ definiert. Die Signaldynamik ist mit dem Abtastraten-Reduktionsfaktor R durch die Beziehung

$$\text{Signaldynamik/dB} = 21 × R^7/2\pi^6$$

verknüpft. Fig. 6 zeigt, daß mit der Kombination aus ΔΣ A/D-Umsetzer 3.1 dritter Ordnung und der Selektionseinheit 3.2 sämtliche hier beispielhaft angegebenen Mobilfunkstandards AMPS, GSM, GSM 384 und IS-95 bedienbar sind.

Bezugszeichenliste

| | |
|---|---|
| 1 | Hochfrequenzteil |
| 1.1 | Verstärker |
| 2 | Empfangsmischstufe |
| 2.1 | erster Abwärtsmischer |
| 2.2 | zweiter Abwärtsmischer |
| 2.3 | 90°-Phasenschieber |
| 3, 3' | Signalverarbeitungsschaltung |
| 3.1 | Delta-Sigma A/D-Umsetzer |
| 3.2 | Selektionseinheit |
| 3.2.1 | digitales Filter |
| 3.2.1.2 | digitaler Filterblock |
| 3.2.2 | Abtastraten-Reduzierrechenwerk |
| 3.2.2.1 | digitaler Abtastraten-Reduzierrechenwerksblock |
| 4 | digitaler Signalprozessor |
| 5 | Steuereinheit |
| 6 | Empfangsantenne |
| 7 | lokaler Oszillator |
| 8 | Mischfrequenzsignal |
| 9, 9' | analoges Empfangssignal |
| 10, 10' | Tiefpaßfilter |
| 11 | analoges I-Empfangssignal |
| 11' | analoges Q-Empfangssignal |
| 12 | digitales Empfangssignal |
| 13 | Bandbreiten-Einstellsignal |
| 14 | Abtastratenreduktions-Einstellsignal |
| 15, 15' | Ausgabesignal |
| 16 | Signalleitung |
| 17 | D/A-Umsetzer |

| 18 | Lautsprecher |
| 19 | Signalleitung |

| FS1, FS2 | Funksignal |
| S1, S2 | Systemstandards |
| $f_A$ | eingangsseitige Abtastrate |
| $f_B$ | ausgangsseitige Abtastrate |

| x | Wert des digitalen Empfangssignals |
| y | Wert des digitalen Ausgangssignals |
| M | Multiplizierer |
| A | Addierer |
| V, V' | Verzögerungsglied |
| DAG | Datenadressengenerator |
| KAG | Koeffizientenadressengenerator |
| S | Speicher |

| K | Ordnung |
| L | Überabtastfaktor |
| R | Abtastraten-Reduktionsfaktor |

## Patentansprüche

1. Schaltungsanordnung für ein Mehrstandard-Kommunikationsendgerät, die

   - ein zur Entgegennahme von HF-Eingangssignalen, insbesondere Fimksignalen (FS1, FS2) unterschiedlicher Systemstandards (S1, S2) vorgesehenes Hochfrequenzteil (1) mit einer Empfangsmischstufe (2), die ein aus einem oder mehreren entgegengenommenen HF-Eingangssignalen (FS1, FS2) gebildetes HF-Empfangssignal durch Heruntermischen mit einer vorgebbaren Mischfrequenz ($f_M$) in ein analoges Empfangssignal (9, 9'; 11, 11') umsetzt, und
   - eine Signalverarbeitungsschaltung (3; 3')

     -- mit einem A/D-Umsetzer (3.1), welcher das analoge Empfangssignal (9, 9'; 11, 11') in ein digitales Empfangssignal (12) umsetzt, und
     -- mit einer ein digitales Filter (3.2.1) enthaltenden Selektionseinheit (3.2), die das digitale Empfangssignal (12) entgegennimmt und die ein bandbreitenbegrenztes digitales Ausgabesignal (15) ausgibt,

   umfaßt, wobei
   - die Durchlaßbandbreite (DB) des digitalen Filters (3.2.1) variabel einstellbar ist, und
   - die im Betrieb eingestellte Durchlaßbandbreite (DB) in Abhängigkeit von einem gewünschten Systemstandard (S1; S2) bestimmt ist,

   **dadurch gekennzeichnet,**

   **daß** das digitale Filter (3.2.1) einen programmierbaren Festwertspeicher (EEPROM) umfaßt, in dem eine Tabelle abgelegt ist, die jedem Systemstandard (S1, S2) einen Satz von Filterkoeffizienten ($\alpha_0$, $\alpha_1$, ..., $\alpha_N$) zuordnet.

2. Schaltungsanordnung nach Anspruch 1, **dadurch gekennzeichnet,**

   - **daß** die Selektionseinheit (3.2) ferner eine Abtastraten-Reduzierschaltung (3.2.2) variabler Abtastratenreduktion (R) umfaßt, und
   - **daß** die im Betrieb eingestellte Abtastratenreduktion (R) in Abhängigkeit von dem gewünschten Systemstandard (S1; S2) bestimmt ist.

3. Schaltungsanordnung nach Anspruch 1 oder 2, **dadurch gekennzeichnet,**
   **daß** das digitale Filter (3.2.1) in Form einer integrierten Schaltung mit einem Bandbreiten - Einstellsignal eingang (13) zum Einstellen von Filterkoeffizienten ($\alpha_0$, $\alpha_1$, ..., $\alpha_N$) ausgebildet ist.

4. Schaltungsanordnung nach einem der Ansprüche 1 bis 3, **dadurch gekennzeichnet,**
   **daß** das digitale Filter (3.2.1) als programmierbarer Signalprozessor ausgebildet ist.

5. Schaltungsanordnung nach Anspruch 4, **dadurch gekennzeichnet,**
   **daß** jedem Systemstandard (S1, S2) ein Filterprogramm zur Steuerung des Signalprozessors zugeordnet ist, wobei bei Wahl eines bestimmten Systemstandards der Signalprozessor gemäß dem zugeordneten Filterprogramm arbeitet.

6. Schaltungsanordnung nach einem der vorhergehenden Ansprüche, **dadurch gekennzeichnet,**
   **daß** das digitale Filter (3.2.1) ein FIR- oder ein IIR-Filter oder ein aus diesen beiden Filtern zusammengesetztes Filter ist.

7. Schaltungsanordnung nach einem der Ansprüche 2 bis 6, **dadurch gekennzeichnet,**

   - **daß** das digitale Filter (3.2.1) aus mehreren Einzelfiltern aufgebaut (3.2.1.1, 3.2.1.2) ist,
   - **daß** die Abtastraten-Reduzierschaltung (2.2.2) aus mehreren einzelnen Abtastraten-Reduzierschaltungen (3.2.2.1, 3.2.2.2) aufgebaut ist, und
   - **daß** die Einzelfilter (3.2.1.1, 3.2.1.2) und die einzelnen Abtastraten-Reduzierschaltungen (3.2.2.1, 3.2.2.2) alternierend in Reihe angeordnet sind.

8. Schaltungsanordnung nach einem der vorhergehenden Ansprüche,
**dadurch gekennzeichnet,**
**daß** das digitale Filter (3.2.1) eine Ordnung N zwischen 5 und 20, insbesondere zwischen 10 und 18 aufweist.

9. Schaltungsanordnung nach einem der vorhergehenden Ansprüche,
**dadurch gekennzeichnet,**
**daß** der A/D-Umsetzer (3.1) ein Delta-Sigma A/D-Umsetzer insbesondere dritter Ordnung ist.

10. Schaltungsanordnung nach Anspruch 9,
**dadurch gekennzeichnet,**
**daß** der Delta-Sigma A/D-Umsetzer (3.1) mit einer von dem gewählten Systemstandard (S1, S2) abhängigen Abtastrate ($f_A$) betrieben wird.

**Claims**

1. Circuit arrangement for a multistandard communications terminal, comprising

   - a radio frequency component (1) provided to receive RF input signals, in particular radio signals (FS1, FS2) of different system standards (S1, S2), with a receive conversion stage (2), which converts an RF receive signal formed from one or more received RF input signals (FS1, FS2) through downconversion with a predefined conversion frequency ($f_M$) into an analogue receive signal (9, 9'; 11, 11'), and
   - a signal-processing circuit (3; 3')

     -- with an A/D converter (3.1), which converts the analogue receive signal (9, 9'; 11, 11') into a digital receive signal (12), and
     -- with a selection unit (3.2) containing a digital filter (3.2.1), which receives the digital receive signal (12) and outputs a bandwidth-limited digital output signal (15), wherein

   - the pass-band (DB) of the digital filter (3.2.1) is variably adjustable, and
   - the pass-band (DB) set in operation is determined according to a required system standard (S1; S2),

   **characterized in that**
   the digital filter (3.2.1) comprises a programmable read-only memory (EEPROM) in which a table is stored which allocates a set of filter coefficients ($\alpha_0$, $\alpha_1$, ..., $\alpha_N$) to each system standard (S1, S2).

2. Circuit arrangement according to Claim 1,
**characterized in that**

   - the selection unit (3.2) furthermore comprises a sampling rate reduction circuit (3.2.2) with variable sampling rate reduction (R), and
   - the sampling rate reduction (R) set in operation is determined according to the required system standard (S1; S2).

3. Circuit arrangement according to Claim 1 or 2,
**characterized in that**
the digital filter (3.2.1) is designed in the form of an integrated circuit with a bandwidth-setting signal input (13) for setting filter coefficients ($\alpha_0$, $\alpha_1$, ..., $\alpha_N$).

4. Circuit arrangement according to one of Claims 1 to 3,
**characterized in that**
the digital filter (3.2.1) is designed as a programmable signal processor.

5. Circuit arrangement according to Claim 4,
**characterized in that**
a filter program for controlling the signal processor is allocated to each system standard (S1, S2), the signal processor operating according to the allocated filter program when a specific system standard is selected.

6. Circuit arrangement according to one of the previous claims,
**characterized in that**
the digital filter (3.2.1) is an FIR or an IIR filter or a filter comprising both of these filters.

7. Circuit arrangement according to one of Claims 2 to 6,
**characterized in that**

   - the digital filter (3.2.1) comprises a plurality of individual filters (3.2.1.1, 3.2.1.2),
   - the sampling rate reduction circuit (2.2.2) comprises a plurality of individual sampling rate reduction circuits (3.2.2.1, 3.2.2.2), and
   - the individual filters (3.2.1.1, 3.2.1.2) and the individual sampling rate reduction circuits (3.2.2.1, 3.2.2.2) are disposed alternately in series.

8. Circuit arrangement according to one of the previous claims,
**characterized in that**
the digital filter (3.2.1) has an order N between 5 and 20, in particular between 10 and 18.

9. Circuit arrangement according to one of the previous claims,

**characterized in that**
the A/D converter (3.1) is a delta-sigma A/D converter, in particular a third-order converter.

10. Circuit arrangement according to Claim 9,
**characterized in that**
the delta-sigma A/D converter (3.1) is operated at a sampling rate ($f_A$) according to the selected system standard (S1, S2).

**Revendications**

1. Circuit pour un terminal de communication multistandard qui comprend

   - une partie haute fréquence (1) prévue pour la réception de signaux d'entrée HF, notamment de signaux radio (FS1, FS2), de différents standards de système (S1, S2) avec un étage mélangeur de réception (2) qui convertit un signal reçu HF formé à partir d'un ou plusieurs signaux d'entrée HF (FS1, FS2) reçus en un signal reçu analogique (9, 9'; 11, 11') par mélange et abaissement de fréquence avec une fréquence de mélange ($f_M$) pouvant être prescrite, et
   - un circuit de traitement de signal (3 ; 3')
   - avec un convertisseur A/D (3.1) qui convertit le signal reçu analogique (9, 9' ; 11, 11') en un signal reçu numérique (12), et
   - avec une unité de sélection (3.2) qui contient un filtre numérique (3.2.1), qui reçoit le signal reçu numérique (12) et qui délivre un signal de sortie numérique (15) de largeur de bande limitée,
   - la largeur de bande passante (DB) du filtre numérique (3.2.1) étant variable et réglable, et
   - la largeur de bande passante (DB) réglée au cours du fonctionnement étant déterminée en fonction d'un standard de système souhaité (S1 ; S2),

     **caractérisé par le fait que**
     le filtre numérique (3.2.1) comprend une mémoire morte programmable (EEPROM) dans laquelle est enregistré un tableau qui associe à chaque standard de système (S1, S2) un ensemble de coefficients de filtrage ($\alpha_0, \alpha_1, ..., \alpha_N$).

2. Circuit selon la revendication 1,
   **caractérisé par le fait que**

   - l'unité de sélection (3.2) comprend en plus un circuit réducteur de taux d'échantillonnage (3.2.2) avec réduction variable de taux d'échantillonnage (R), et
   - la réduction de taux d'échantillonnage (R) réglée au cours du fonctionnement est déterminée en fonction du standard de système souhaité (S1 ; S2).

3. Circuit selon la revendication 1 ou 2,
   **caractérisé par le fait que** le filtre numérique (3.2.1) est conçu sous la forme d'un circuit intégré avec une entrée de signal de réglage de largeur de bande (13) pour le réglage de coefficients de filtrage ($\alpha_0, \alpha_1, ..., \alpha_N$).

4. Circuit selon l'une des revendications 1 à 3,
   **caractérisé par le fait que** le filtre numérique (3.2.1) est conçu comme un processeur de signal programmable.

5. Circuit selon la revendication 4,
   **caractérisé par le fait qu'**il est associé à chaque standard de système (S1, S2) un programme de filtrage pour la commande du processeur de signal et que, lorsqu'un certain standard de système est choisi, le processeur de signal travaille selon le programme de filtrage associé.

6. Circuit selon l'une des revendications précédentes,
   **caractérisé par le fait que** le filtre numérique (3.2.1) est un filtre FIR ou IIR ou un filtre composé de ces deux filtres.

7. Circuit selon l'une des revendications 2 à 6,
   **caractérisé par le fait que**

   - le filtre numérique (3.2.1) est construit à partir de plusieurs filtres individuels (3.2.1.1, 3.2.1.2),
   - le circuit réducteur de taux d'échantillonnage (2.2.2) est construit à partir de plusieurs circuits réducteurs de taux d'échantillonnage individuels (3.2.2.1, 3.2.2.2), et
   - les filtres individuels (3.2.1.1, 3.2.1.2) et les circuits réducteurs de taux d'échantillonnage individuels (3.2.2.1, 3.2.2.2) sont montés en série en alternance.

8. Circuit selon l'une des revendications précédentes,
   **caractérisé par le fait que** le filtre numérique (3.2.1) a un ordre N compris entre 5 et 20, notamment entre 10 et 18.

9. Circuit selon l'une des revendications précédentes,
   **caractérisé par le fait que** le convertisseur A/D (3.1) est un convertisseur A/D delta-sigma notamment de troisième ordre.

10. Circuit selon la revendication 9,
    **caractérisé par le fait que** le convertisseur A/D delta-sigma (3.1) fonctionne avec un taux d'échantillonnage ($f_A$) dépendant du standard de système choisi (S1, S2).

Fig. 1

Fig. 2

Fig. 3

Fig. 4

Fig. 5

$$\text{Signaldynamik/dB} = \frac{21 \times R^7}{2\pi^6}$$

Fig. 6